# FASCICULE DE BREVET EUROPEEN

(11) **EP 4 205 362 B1**
(45) Date de publication et mention de la délivrance du brevet: **13.11.2024**
(21) Numéro de dépôt: 21746517.8
(22) Date de dépôt: 06.07.2021
(51) Int. Cl.: H04L 67/12, H04L 69/324, H04L 69/329

(54) **RÉSEAU DE FLUX PRIORISÉS DE DONNÉES EMBARQUÉ DANS UN VEHICULE**
IN EIN FAHRZEUG EINGEBETTETES NETZWERK FÜR PRIORISIERTEN DATENFLUSS
PRIORITIZED DATA FLOW NETWORK EMBEDDED IN A VEHICLE

(30) Priorité: 27.08.2020 FR 2008728
(43) Date de publication de la demande: 05.07.2023
(73) Titulaire: Stellantis Auto SAS, 78300 Poissy (FR)
(72) Inventeur: LI, Xiaoting, 78310 MAUREPAS (FR); LIN, Trista, 28210 VILLEMEUX SUR EURE (FR)
(86) Numéro de dépôt international: PCT/FR2021/051238
(87) Numéro de publication internationale: WO 2022/043625

(56) Documents cités:
- WO-A1-2018/137838
- US-A1- 2018 126 930
- US-A1- 2019 319 820

## Description

### Domaine technique

L'invention concerne les réseaux de données et plus particulièrement les réseaux embarqués dans les véhicules.

### Arrière-plan technologique

Avec le développement des systèmes à la conduite, (et notamment les nouvelles fonctions de conduites autonomes nécessitant l'utilisation de caméras haute résolution) la quantité d'information échangée par le réseau embarqué des véhicules s'est fortement accrue. Les réseaux embarqués traditionnels (CAN, LIN, etc.) ne peuvent répondre à ce nouveau besoin d'information échangée en raison de leur limitation de bande passante.

Par conséquent, les réseaux Ethernet sont utilisés dans le réseau des véhicules pour tirer parti de leur bande passante plus large et des services/protocoles plus standardisés et plus disponibles. Toutefois, pour des raisons économiques et pour l'immaturité de cette nouvelle technologie dans le domaine de l'automobile, les réseaux embarqués traditionnels continuent de coexister avec l'Ethernet dans l'architecture du réseau automobile.

Les fonctions de conduites autonomes, utilisant de nombreuses caméras haute résolution, peuvent générer un trafic intense sur le réseau de données du véhicule. Ce trafic peut devenir critique dans certaines circonstances. Cela peut être le cas par exemple en environnement urbain avec beaucoup de vélos et de véhicules environnants.

Un des inconvénients des systèmes actuels est que rien n'est prévu pour gérer ce trafic intense, si bien que les fonctions de conduites autonomes sont susceptibles de ne plus fonctionner de façon nominale.

Le document US 2019/319820 divulgue un équipement réseau capable de gérer des priorités. Le document US 2018/126930 divulgue un réseau interne à un véhicule.

### Résumé de l'invention

Un objet de la présente invention est de proposer une solution pour permettre le fonctionnement nominal de fonction générant un fort trafic réseau y compris en cas de trafic intense sur le réseau de données du véhicule.

A cet effet, l'invention a pour objet un réseau de données embarqué dans un véhicule, comme celui de la revendication 1. Des modes de réalisation préférés sont couverts par les revendications dépendantes.

Avec l'invention, le premier équipement détermine un niveau de criticité reflétant le niveau de trafic sur le réseau. Ce niveau de criticité est transmis aux équipements du réseau qui peuvent alors adapter les flux de données transmis en chargeant une table de configuration de flux adaptée.

Avec l'invention, on peut par exemple facilement supprimer certains flux de données jugées non essentiels (par exemple, les flux de données liés à l'info-divertissement) pour réduire le trafic du réseau et ainsi laisser plus de bande passante aux flux de données liées à des fonctions critiques (par exemple, les fonctions d'aide à la conduite).

Avantageusement, le deuxième équipement (ECU2) comportant un pluralité d'interfaces, table de configuration indique, pour un niveau de criticité donné, quel flux est transmis par quelle interface.

Avantageusement, le premier équipement (ECU1) est un équipement de commutation comportant plusieurs liaisons de données.

Avantageusement, les données de supervision de réseau sont issues d'un réseau local au premier équipement (ECU1).

Avantageusement, le réseau comporte au moins une liaison de données choisie parmi ; CAN, Ethernet, FlexRay ou LIN.

L'invention concerne véhicule comportant un réseau selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre schématiquement un réseau de données d'un véhicule configuré selon un premier niveau de criticité, selon un exemple de réalisation particulier de la présente invention ;
[Fig. 2] illustre schématiquement le réseau de la figure 1 configuré selon un deuxième niveau de criticité ;
[Fig. 3] illustre schématiquement le réseau de la figure 1 configuré selon un troisième niveau de criticité.

Avec l'invention, différents niveaux de criticité du réseau sont définis ainsi que la configuration correspondante sur tous les ECUS configurables en fonction de différents scénarios fonctionnels. La configuration fait référence à une table prédéfinie de configuration de flux associé à un niveau criticité.

Les paragraphes suivants donnent un exemple de niveaux de criticité et configurations associées :
Un premier niveau criticité (niveau 0, scénario normal) représente un scénario normal dans lequel tous les flux, critiques et non critiques, sont transmis sans restriction.

Un deuxième niveau de criticité (niveau 1) est identifié lorsque le retard d'un flux critique dépasse un certain seuil. Ce niveau de criticité conduit à la suppression de plusieurs transmissions de flux non critiques afin de donner plus de ressources réseau à d'autres flux et d'améliorer les performances de retard.

Un troisième niveau de criticité (niveau 2) est identifié lorsqu'il y a des trames sont supprimés des mémoires tampons à cause de congestions du réseau. Ce niveau de criticité permet uniquement aux flux critiques de passer par le réseau Ethernet et une copie de certains flux critiques doit être transmise par un chemin d'accès réseau redondant (par exemple, réseau CAN). Il s'agit du niveau le plus sévère de l'exemple et représente une détérioration de l'environnement.

Le nombre de niveaux de criticité et le comportement de transmission attendu à chaque niveau peuvent être définis en fonction des besoins de l'application. Les définitions ci-dessus ne sont qu'un exemple non limitatif.

Sur la base de chaque niveau de criticité, chaque équipement configurable doit configurer une table de configuration de flux pour définir le chemin de chaque flux transmis.

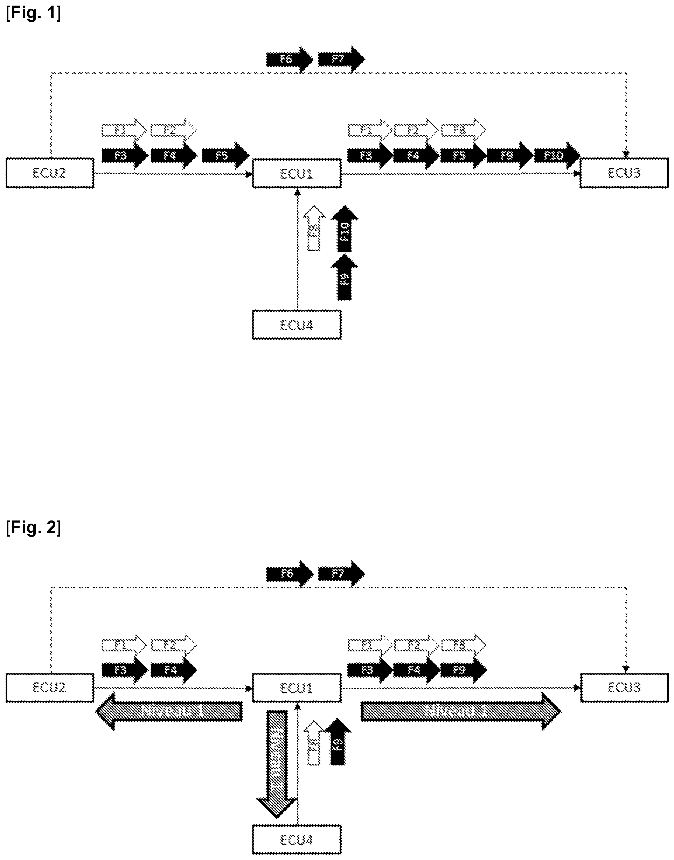

La figure 1 illustre schématiquement un réseau de données d'un véhicule. Le réseau comporte quatre équipements (ECU1, ECU2, ECU3, ECU4).

Le premier équipement ECU1 est par exemple un switch (ou routeur) Ethernet. Il est connecté directement aux trois autres équipements. Le deuxième équipement ECU2 est par exemple un calculateur dédié aux fonctions d'assistance à la conduite. Le troisième équipement est par exemple une antenne permettant au véhicule de communiquer avec des infrastructures extérieures par exemple via un réseau étendu de type Internet. Le quatrième équipement ECU4 est par exemple un autre calculateur du véhicule.

Des flèches numérotées de 1 à 10 représentent des flux de données. On distingue les flux correspondants à des applications dites critiques (flèches claires) par exemple celles liées aux fonctions d'aide à la conduite, des flux correspondants à des applications dites non-critiques (flèches foncées) par exemple celles liées aux fonctions de divertissement (par exemple diffusion de musique ou de film).

Par exemple, au niveau de criticité 0, l'ECU2 transmet 2 flux Ethernet critiques (F1 et F2) et 3 flux Ethernet non critiques (F3, F4 et F5) à ECU3 par l'intermédiaire de ECU1, et 2 flux non critiques CAN (F6 et F7) directement à ECU3 par l'intermédiaire du réseau CAN.

Dans cet exemple, la table de configuration de flux de ECU2 associée au niveau de criticité 0 est la suivante :

**[Table 1]**

| Criticité 0 | CAN interface | Ethernet interface |
|---|---|---|
| | F6 | F1 |
| | F7 | F2 |
| | | F3 |
| | | F4 |
| | | F5 |

La table indique pour chaque flux transmis quelle interface est utilisée. Chaque ECU peut avoir des stratégies de configuration différentes basées sur des niveaux de criticité différents. Un autre exemple est ECU4, qui a un flux critique F8 et deux flux non critiques F9 et F10. ECU4 partage une liaison Ethernet avec ECU1 et n'a pas d'interface réseau CAN.

La table de configuration de flux de ECU4 pour le niveau de criticité 0 est semblable au tableau suivant :

**[Table 2]**

| Criticité 0 | Ethernet interface |
|---|---|
| | F8 |
| | F9 |
| | F10 |

Le changement de niveau de criticité est géré par un calculateur particulier (appelé superviseur) et est basé sur une surveillance des performances du réseau.

Un superviseur doit surveiller les performances du réseau, comme le retard de la mémoire tampon ou la perte de trame. Afin de réduire et de simplifier le traitement de la surveillance du superviseur et afin de garantir un traitement en temps réel, le superviseur est de préférence situé dans un équipement Ethernet central, comme un commutateur par lequel transite du trafic avec différents niveaux de criticités.

Avantageusement, le superviseur surveille les performances de son réseau local au lieu de surveiller toutes les liaisons Ethernet. Cela signifie que le superviseur n'a pas besoin d'envoyer du trafic supplémentaire à d'autres équipement Ethernet et d'attendre une réponse avec un retard pour la surveillance. Cela rend également la surveillance légère et en temps réel.

En fonction des performances du réseau surveillé, le superviseur détermine le niveau de criticité du réseau au moment de l'exécution. En cas de changement de niveau de criticité, le superviseur envoie une trame de configuration aux équipements concernés pour les informer du changement de niveau de criticité. La transmission d'une trame de configuration peut être effectuée par des protocoles de communication standard, comme MQTT, WebSocket, SOME/IP, DDS, HTTP, etc. Aucun développement supplémentaire de protocole de communication n'est nécessaire.

Par, si la surveillance détectée a dépassé le délai et qu'elle décide de passer du niveau de criticité du réseau de 0 à 1, le superviseur transmet alors une trame de configuration transportant l'information du niveau de criticité (élément critique 1) à tous les autres équipements ayant une table de configuration de flux. Lorsqu'un équipement reçoit une trame de configuration indiquant un changement de niveau de criticité, il reconfigure la transmission des flux sur la base d'une table prédéfinie de configuration flux associé au niveau de criticité reçu.

Avec l'invention, un équipement est configurable et permet de différencier parmi les flux transmis ceux critiques et ceux non critiques. Cette différenciation se traduit au niveau de la table de configuration de flux. Les tables de configuration de flux sont prédéfinies (autrement dit, codées en dur) afin d'accélérer le temps de traitement. Par exemple, si le réseau de sauvegarde de redondance est le réseau CAN, les flux critiques Ethernet, qui pourraient être transmis par ce réseau CAN de sauvegarde à des niveaux de criticité plus élevés, sont pris en compte dans l'implémentation de la pile logicielle de communication CAN. Dans l'exemple ci-dessus de l'équipement ADAS, les flux F1 et F2 sont des flux Ethernet. Mais comme leurs copies peuvent être transmises par un réseau CAN à des niveaux de criticité plus élevés, elles doivent être mises en oeuvre dans la pile logiciel de communication CAN.

La figure 2 montre la transmission du flux après le changement du niveau de criticité à 1. Afin d'améliorer les performances du réseau (notamment en terme de latence), les transmissions de flux de F5 et F10 sont supprimées.

La table de configuration de flux de ECU2 pour le niveau de criticité 1 est semblable au tableau suivant :

**[Table 3]**

| Criticité 1 | CAN interface | Ethernet interface |
|---|---|---|
| | F6 | F1 |
| | F7 | F2 |
| | | F3 |
| | | F4 |

La table de configuration de flux de ECU4 pour le niveau de criticité 1 est semblable au tableau suivant :

**[Table 4]**

| Criticité 1 | Ethernet interface |
|---|---|
| | F8 |
| | F9 |

Dans le même exemple, si le superviseur détecte une suppression de trames causée par un débordement de mémoire tampon, il décide de passer du niveau de criticité du réseau 1 à 2. Le superviseur transmet alors une trame de configuration transportant l'information du niveau de criticité (niveau 2) à tous les autres équipements ayant une table de configuration de flux. Lorsqu'un équipement reçoit la trame de configuration pour le changement de niveau de criticité, il reconfigure sa transmission de flux en se basant sur la table prédéfinie associé au niveau de criticité.

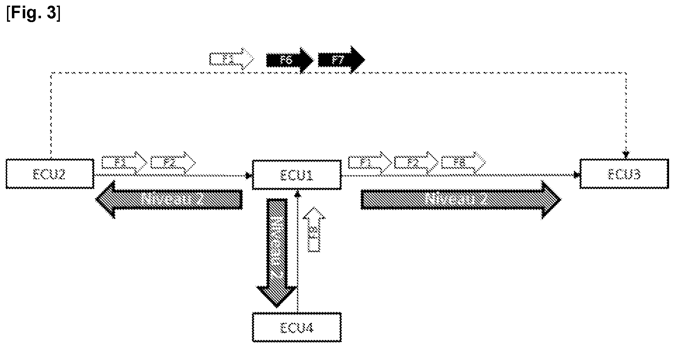

La figure 3 montre la transmission du flux après le changement du niveau de criticité à 2. Dans un environnement qui se détériore, avec des pertes de trame, outre les transmissions supprimées de flux non critiques, pour des raisons de sécurité, une copie de certains flux critiques ADAS est transmise par un autre réseau, qui est un type de réseau différent de celui d'Ethernet. Dans l'exemple, une copie du flux F1 est transmise par le réseau CAN.

La table de configuration de flux de ECU2 pour le niveau de criticité 2 est semblable au tableau suivant :

**[Table 5]**

| Criticité 2 | CAN interface | Ethernet interface |
|---|---|---|
| | F1 | F1 |
| | F6 | F2 |
| | F7 | |

La table de configuration de flux de ECU4 pour le niveau de criticité 2 est semblable au tableau suivant :

**[Table 6]**

| Criticité 2 | Ethernet interface |
|---|---|
| | F8 |

L'invention propose une gestion dynamique et légère des transmissions de flux critiques afin de garantir la qualité de service dans un réseau automobile hétérogène.

L'invention n'est pas limitée au réseau CAN ou Ethernet, Il peut s'agir tout autre réseau comme FlexRay ou LIN.

La supervision du premier équipement s'applique au niveau applicatif du modèle ISO.

Le tableau prédéfini du deuxième équipement s'applique au niveau liaison de données (couche 2) du modèle ISO.

## Revendications

1. Réseau de données embarqué dans un véhicule, ledit réseau comportant un premier (ECU1) et au moins un deuxième équipement (ECU2, ECU3, ECU4) connectés par au moins une interface ou une liaison de données du réseau, lesdits équipements (ECU1, ECU2 ECU3, ECU4) étant aptes à transmettre une pluralité de flux de données (F1, ..., F10), **caractérisé en ce que** :
- Le premier équipement (ECU1) est configuré pour déterminer un niveau de criticité en fonction de données de supervision de réseau et transmettre ledit niveau de criticité au deuxième équipement (ECU2, ECU3, ECU4),
- Le deuxième équipement (ECU2, ECU3, ECU4) comportant une pluralité d'interfaces et étant configuré pour, en réponse la réception dudit niveau de criticité, charger une table de configuration de flux prédéfinie, associée audit niveau de criticité, ladite table indiquant quels flux de données sont transmis par ledit deuxième équipement (ECU2, ECU3, ECU4). et pour un niveau de criticité donné, quel flux est transmis par quelle interface.

2. Réseau selon l'une des revendications précédentes, dans lequel, le premier équipement (ECU1) est un équipement de commutation comportant plusieurs liaisons de données.

3. Réseau selon l'une des revendications précédentes, dans lequel, les données de supervision de réseau sont issues d'un réseau local au premier équipement (ECU1).

4. Réseau selon l'une des revendications précédentes, comportant au moins une liaison de données choisie parmi ; CAN, Ethernet, FlexRay ou LIN.

5. Véhicule comportant un réseau selon l'une des revendications précédentes.

## Patentansprüche

1. Datennetzwerk an Bord eines Fahrzeugs, wobei das Netzwerk ein erstes (ECU1) und mindestens ein zweites Ausrüstungsteil (ECU2, ECU3, ECU4) umfasst, die über mindestens eine Schnittstelle oder Datenverbindung des Netzwerks verbunden sind, wobei die Ausrüstungsteile (ECU1, ECU2, ECU3, ECU4), die in der Lage sind, mehrere Datenströme (F1, ..., F10) zu übertragen, **dadurch gekennzeichnet, dass**:
- Das erste Gerät (ECU1) ist so konfiguriert, dass es auf der Grundlage von Netzwerküberwachungsdaten einen Kritikalitätsgrad ermittelt und diesen Kritikalitätsgrad an das zweite Gerät (ECU2, ECU3, ECU4) überträgt.
Die zweite Ausrüstung (ECU2, ECU3, ECU4) umfassend eine Vielzahl
- Schnittstellen und dazu konfiguriert ist, als Reaktion auf den Empfang der Kritikalitätsstufe eine vordefinierte Flusskonfigurationstabelle zu laden, die der Kritikalitätsstufe zugeordnet ist, wobei die Tabelle angibt, welche Datenflüsse von der zweiten Ausrüstung (ECU2, ECU3, ECU4) übertragen werden. Und , für eine gegebene Kritikalitätsstufe, welcher Fluss von welcher Schnittstelle übertragen wird.

2. Netzwerk nach einem der vorhergehenden Ansprüche, bei dem die erste Ausrüstung (ECU1) eine Vermittlungsausrüstung mit mehreren Datenverbindungen ist.

3. Netzwerk nach einem der vorhergehenden Ansprüche, bei dem die Netzwerküberwachungsdaten von einem lokalen Netzwerk am ersten Gerät (ECU1) stammen.

4. Netzwerk nach einem der vorhergehenden Ansprüche, umfassend mindestens eine Datenverbindung, ausgewählt aus: CAN, Ethernet, FlexRay oder LIN.

5. Fahrzeug umfassend ein Netzwerk nach einem der vorhergehenden Ansprüche.

## Claims

1. Data network embedded in a vehicle, said network comprising a first (ECU1) and at least one second device (ECU2, ECU3, ECU4) connected by at least one interface or data link of the network, said devices (ECU1, ECU2, ECU3, ECU4) being capable of transmitting a plurality of data streams (F1, ..., F10), **characterized in that**:
- The first equipment (ECU1) is configured to determine a criticality level based on network supervision data and transmit said criticality level to the second equipment (ECU2, ECU3, ECU4),
The second equipment (ECU2, ECU3, ECU4) comprising a plurality
- of interfaces and being configured to, in response to receiving said criticality level, load a predefined flow configuration table, associated with said criticality level, said table indicating which data flows are transmitted by said second equipment (ECU2, ECU3, ECU4). and
, for a given criticality level, which flow is transmitted by which interface.

2. Network according to one of the preceding claims, in which the first equipment (ECUL) is switching equipment comprising several data links.

3. Network according to one of the preceding claims, in which the network supervision data comes from a local network at the first equipment (ECU1).

4. Network according to one of the preceding claims, comprising at least one data link chosen from; CAN, Ethernet, FlexRay or LIN.

5. Vehicle comprising a network according to one of the preceding claims.
